**Europäisches Patentamt**

**European Patent Office**

**Office européen des brevets**

(19)

(11) Veröffentlichungsnummer : **0 537 219 B1**

## EUROPÄISCHE PATENTSCHRIFT

(12)

(45) Veröffentlichungstag der Patentschrift :
**02.03.94 Patentblatt 94/09**

(51) Int. Cl.⁵ : **F01N 3/02,** F01N 3/28

(21) Anmeldenummer : **91911857.0**

(22) Anmeldetag : **01.07.91**

(86) Internationale Anmeldenummer :
**PCT/AT91/00080**

(87) Internationale Veröffentlichungsnummer :
**WO 92/00442 09.01.92 Gazette 92/02**

(54) **VERFAHREN UND VORRICHTUNG ZUR REINIGUNG VON ABGASEN.**

(30) Priorität : **02.07.90 AT 1406/90
13.08.90 AT 1684/90**

(43) Veröffentlichungstag der Anmeldung :
**21.04.93 Patentblatt 93/16**

(45) Bekanntmachung des Hinweises auf die
Patenterteilung :
**02.03.94 Patentblatt 94/09**

(84) Benannte Vertragsstaaten :
**AT CH DE ES FR GB IT LI NL SE**

(56) Entgegenhaltungen :
**EP-A- 332 609
DE-A- 3 035 206
DE-A- 3 638 203
DE-A- 3 802 190**

(56) Entgegenhaltungen :
**DE-A- 3 804 779
DE-C- 497 081
FR-A- 2 637 940
GB-A- 411 807
GB-A- 2 064 361
GB-A- 2 181 968
US-A- 3 440 800**

(73) Patentinhaber : **Fleck, Carl Maria, Dr.
Doktorberg 23, E5
A-2391 Kaltenleutgeben (AT)**

(72) Erfinder : **Fleck, Carl Maria, Dr.
Doktorberg 23, E5
A-2391 Kaltenleutgeben (AT)**

(74) Vertreter : **Kliment, Peter, Dipl.-Ing. Mag.-jur.
Singerstrasse 8
A-1010 Wien (AT)**

EP 0 537 219 B1

## Beschreibung

Die Erfindung betrifft ein Verfahren zur Reinigung von Abgasen, insbesondere von Dieselmotorabgasen.

Bei der Reinigung von Abgasen von Aerosolen, insbesondere Ruß, ergibt sich häufig das Problem, daß sich die Rußpartikel in dem Filter anlagern und dessen Durchlässigkeit vermindern, sodaß der Ruß von Zeit zu Zeit abgebrannt werden muß. Dazu ist es bei den herkömmlichen Filtern notwendig, entsprechende Wärmemengen dem Filter zuzuführen, wobei dazu Temperaturen im Bereich von ca. 600°C notwendig sind. Bei Dieselabgasen besteht noch die Möglichkeit, dem Kraftstoff Additive zuzusetzen, die im Verbrennungsraum molekulares Eisen(III)oxid bilden, die dann die Verbrennungstemperatur des Rußes unter 400°C drücken, wodurch die Motorwärme, bzw. die Wärme der Abgase ausreicht, um den angelagerten Ruß zum Abbrennen zu bringen. Diese Zusätze verursachen jedoch einen vermehrten Kraftstoffverbrauch und das Eisen(III)oxid bleibt sehr lange schwebefähig und ist im Hinblick auf seine Umweltverträglichkeit problematisch.

Aus der DE-A-38 34 920 ist ein Verfahren zum Beseitigen von Ruß aus Abgasen bekannt, bei dem Rußpartikel in einem Filterkörper mit Hilfe eines elektrischen Feldes abgeschieden werden. Die Verbrennung des Rußes erfolgt dabei durch Lichtbögen, deren Fußpunkte sich im Bereich von Rußpartikeln befinden. Obwohl ein solches Verfahren geeignet ist die Abgase zu reinigen, so hat sich doch herausgestellt, daß zur Reinigung der Abgase eines Kraftfahrzeugdieselmotors üblicher Größe und Bauart eine so hohe elektrische Leistung benötigt wird, daß das Verfahren wirtschaftlich nicht durchführbar erscheint.

Aus der DE-A 37 23 544 ist ein Filter zum Reinigen von Gasen bekannt, bei dem brennbare Partikel durch eine Koronaentladung oxidiert werden sollen. Es ist vorgesehen, daß sich die abzuscheidenden Partikel an einer der Elektroden anlagern, die als Partikelfalle ausgebildet ist. Zwischen den Elektroden soll es dabei zu einer starken Koronaentladung kommen, die ionisierten Sauerstoff erzeugt. Bei einer solchen Vorrichtung kommt es unvermeidbar zu starken Funkenüberschlägen, die neben einer starken Materialbelastung eine hohe elektrische Leistung erfordern. Solche Filter sind nicht für den Dauerbetrieb in Kraftfahrzeugen geeignet.

Weiters ist es aus der EP-A 332 609 des Anmelders bekannt, Abgase zuerst zu ionisieren und dann durch einen Kanal eines Keramikkörpers hindurchzuleiten, in welchem Kanal ein elektrisches Feld im wesentlichen quer zur Strömungsrichtung aufgebaut ist. Dabei werden die an den Wänden des Kanals angelagerten Rußteilchen bei relativ hohen Temperaturen verbrannt. Diese Temperaturen zu erzeugen ist in manchen Anwendungsfällen schwierig.

Weitere bekannte Vorrichtungen arbeiten auf dem Prinzip, daß die Rußpartikel nach deren Ablagerung von Zeit zu Zeit durch Zufuhr einer entsprechenden Wärmemenge verbrannt werden, oder daß die Rußpartikel durch das elektrische Feld agglomeriert und anschließend in einem Zyklonabscheider abgeschieden und anschließend dem Gemisch zur Verbrennung in den Zylindern der Brennkraftmaschine zugeführt werden.

Der Nachteil der bekannten Lösungen liegt darin, daß einerseits sehr beträchtliche Wärmemengen zur Verbrennung des abgelagerten Russes aufgebracht werden müssen und bei der zweiten Art der Zyklonabscheider einen erheblichen apparativen Aufwand und im Betrieb erhebliche Energiemengen erfordert.

Es sind auch Verfahren bekannt, bei denen Abgase durch einen porösen Keramikkörper geführt werden, der die darin enthaltenen Partikel zurückhält. Solche Verfahren sind beispielsweise in den folgenden Druckschriften beschrieben: DE-A 36 38 203, EP-A 212 396, EP-A 270 990, GB-A 2 064 361, US-A 4,662,911. Obwohl durch verschiedene Maßnahmen für eine Entfernung oder Vernichtung der Rußpartikel vorgesorgt wird, weisen solche Filter einen unakzeptabel hohen Strömungswiderstand auf. Insbesonders im Teillastbereich kann es zur Bildung von Rußablagerungen kommen, die einen beträchtlichen Druckverlust bewirken. Solche Konzepte sehen Waben oder Zellenfilter vor, die aus aneinanderliegenden langen Filterzellen bestehen, die vorzugsweise einen quadratischen Querschnitt besitzen und abwechselnd an der Eintrittsseite und an der Austrittsseite durch einen Pfropfen verschlossen sind. Die zu filternden Abgase können durch die zwei solcher Filterzellen gemeinsame poröse Wand hindurchtreten, während die Aerosole durch die Poren nicht hindurch können und in jener Zelle abgelagert werden, die eingangsseitig offen ist. Diese Filter sind zum Teil aus hochtemperaturfestem Keramikmaterial hergestellt und vorzugsweise mit katalytischen Substanzen beschichtet oder gedopt, sodaß es bei Sauerstoffüberschuß bereits unter 600°C zu einer Verbrennung der abgeschiedenen Rußpartikel kommt. Da diese Temperaturen nur bei Vollgasbetrieb erreicht werden, kommt es in den Perioden dazwischen zu einem erheblichen Aufbau von Gegendruck, der die Motorleistung in unangenehmer Weise reduziert. Dazu kommt eine bleibende Verlegung der Poren durch nicht brennbare metallische Verunreinigungen der Rußpartikel, sodaß es langfristig zu einem irreversiblen Aufbau von Gegendruck am Abgasfilter kommt. Darüberhinaus ergibt sich eine strukturelle Erschöpfung der ausgangsseitigen Abschlußstopfen mit der Einsatzzeit, die zu einer wachsenden Undichtheit des Filters nach längeren Einsatzzeiten führt.

Weiters ist es bekannt, Abgase dadurch zu reinigen, daß zunächst die Rußpartikel durch Anwendung elektrischer Felder zu größerem Teilchen agglomeriert werden, die dann von einem mechanischen Abscheider, wie einem Zyklon, aus dem Abgasstrom abgetrennt werden können. Dies ist etwa in der DE-A 34 24 196 oder in der WO 85/00408 vorbeschrieben. Abgesehen davon, daß solche Vorrichtungen relativ aufwendig sind ist bei einem solchen Verfahren das Problem der Entsorgung der abgeschiedenen Rußpartikel noch nicht gelöst. Es ist inakzeptabel für den Betreiber eines Dieselfahrzeuges in kurzen Abständen Manipulationen an einem Sammelbehälter für Ruß durchführen zu müssen.

Ferner ist es aus der DE-A 33 24 886 bekannt, Partikel unter Ausnutzung eines elektrischen Feldes zunächst zu größeren Teilchen zu agglomerieren und dann in einen Hohlleiter einzusaugen. Auch hier stellt sich das Problem der endgültigen Entsorgung der abgeschiedenen Partikel. Ein Rückführung in den Ansaugstutzen des Dieselmotors ist wegen des erhöhten Verschleißes, den die Partikel hervorrufen, meist unerwünscht.

Weiters wurde durch die DE-A 38 04 779 eine Vorrichtung zum Entfernen von Rußpartikeln aus dem Abgasstrom einer Dieselbrennkraftmaschine bekannt, bei der in einer Abgasleitung eine Rußpartikelsammelstrecke angeordnet ist. Diese besteht im wesentlichen aus einer Ionisationsstrecke, in der eine ultraviolette Lichtquelle angeordnet ist. Dieser ist eine zentrale Elektrode nachgeordnet, die von zwei konzentrischen Elektroden umgeben ist, von denen die innere mit Durchbrüchen versehen ist. Die zentrale Elektrode liegt an einem gemeinsamen Potential einer Nieder- und einer Hochspannungsquelle, von denen die erstere mit dem zweiten Pol der Niederspannungsquelle und die zweite mit dem zweiten Pol der Hochspannungsquelle verbunden ist. Im Betrieb werden die im Abgasstrom enthaltenen Rußpartikel im Bereich der Ionisationsstrecke aufgeladen und werden im Bereich der zylindrischen Elektroden aufgrund des dort herrschenden Feldes in Richtung zur zentralen Elektrode hin abgelenkt, durchdringen die innere zylinderförmige Elektrode und lagern sich an der innersten Elektrode an. Erreichen die Anlagerungen eine Höhe, bei der sie die innere zylindrische Elektrode berühren so bilden diese einen Kurzschluß für die Niederspannungsquelle und brennen ab. Der Nachteil dieser bekannten Vorrichtung liegt darin, daß es aufgrund des gegenüber der äußeren Elektrode sehr niedrigen Potentiales der inneren zylindrischen Elektrode zu einem Anlegen der Rußpartikel auch an der Außenseite dieser Elektrode kommt, wobei diese Rußpartikel aber kaum Verbrennen könnten und sich bei einer entsprechenden Dicke der Schicht aufgrund mechanischer Einflüsse, wie Vibrationen u.dgl. in größeren Flocken lösen. Um einen ausreichenden Reinigungsgrad der Abgase zu erreichen, ist es daher auch bei dieser Vorrichtung nötig, einen mechanischen Abscheider, z.B. einen Zyklonabscheider, nachzuordnen, wodurch sich ein entsprechend hoher konstruktiver Aufwand und ein sehr erheblicher Platzbedarf ergibt.

Schließlich zeigt die GB-A 411,807 eine Vorrichtung, bei der zunächst Abgasbestandteile durch elektrische Felder abgeschieden werden, um die Vergiftung des nachfolgenden Katalysators zu vermeiden. Die Entsorgung der abgeschiedenen Abgasbestandteile ist jedoch nicht geklärt.

Aufgabe der Erfindung ist es, diese Nachteile zu vermeiden und ein Verfahren zu schaffen, das es in einfacher Art ermöglicht, Rußpartikel nicht nur abzuscheiden, sondern vollständig zu vernichten, wobei eine lange Standzeit bei weitgehender Wartungsfreiheit gefordert ist.

Diese Aufgabe wird durch ein Verfahren gelöst, bei dem die Abgase durch einen Kanal eines Keramikkörpers hindurchgeleitet werden, in welchem Kanal ein elektrisches Feld im wesentlichen quer zur Strömungsrichtung aufgebaut ist, wobei die an den Wänden des Kanals angelagerten Rußteilchen durch freie oder an Sauerstoff angelagerte Elektronen oxidiert werden. Es können jedoch auch positive Ionen, insbesonders bei einer Wechselstromentladung an der Oxidation beteiligt sein.

Wesentlich an der Erfindung ist es, daß es im Kanal des Keramikkörpers zu einem Elektronensprühen oder zu einer Autoionisation kommt. Funken kommen beim erfindungsgemäßen Verfahren an sich nicht vor. Sollte jedoch an einer Stelle ein Funken entstehen, so fällt das elektrische Feld in dessen Umgebung durch den hohen Widerstand des Keramikmaterials stark ab, sodaß der Funken sofort verlöscht. Durch diese Maßnahmen wird eine besonders niedrige Temperaturgrenze für die Verbrennung von Ruß erreicht, sodaß eine hohe Reinigungswirkung auch bei Teillast sichergestellt ist.

Die Anwesenheit der freien Elektronen bewirkt eine Bildung von $O_2^-$ und $O^-$ Radikalen, die sich durch eine derart hohe Reaktionsbereitschaft auszeichnen, daß es bereits unter 150°C zu chemischen Reaktionen mit den Kohlenwasserstoffen und Kohlenstoff im abgeschiedenen Ruß kommt, wobei der Ruß verbrennt. Es ist jedoch auch möglich, daß die freien Elektronen selbst eine Aktivierung der Rußpartikel bewirken und so eine Verbrennung bei niedrigen Temperaturen begünstigen. Es ist dabei nicht unbedingt erforderlich, gleich viele negative Ladungen bereitzustellen, wie Rußatome abgeschieden werden.

So können z.B. bei einem PKW pro Sekunde z.B. $10^{20}$ abgeschiedenen Kohlenstoffatomen lediglich $10^{17}$ bis $10^{18}$ elektrische Ladungen gegenüberstehen, wenn die erforderliche Leistung klein gehalten werden soll. Es muß daher eine durch eine negative Ladung eingeleitete Reaktion eine Reihe weiterer Reaktionen nach sich ziehen. An sich reicht dazu die Reaktionswärme der ersten Reaktion allein nicht aus, da einerseits der Filter und andererseits die große durchstreifende Luftmenge die Wärme ableitet. Es reagiert daher nur jener Teil des Kohlenstoffes, der entsprechend der Maxwell-Boltzmannverteilung genügend kinetische Energie für die Reaktion besitzt.

Für den abgeschiedenen Ruß C im Filter ergibt sich bei einer Temperatur T die folgende Differentialgleichung:

$$\frac{dC}{dt} = C_0 - k[O_2^-]C[O_2]e^{-\frac{T_s - T}{T}}$$

wobei $T_S$ jene Temperatur, bei der der Kohlenstoff frei brennt und $C_o$ die Abscheiderate des Rußes bedeuten.

Grundsätzlich soll der Filter ebenso schnell abbrennen, wie er abgeschieden wird. Für diesen Gleichgewichtsfall ergibt sich für die im Filter verbleibende Rußmenge aus der Gleichung:

$$C = \frac{C_0}{k[O_2^-][O_2]} e^{\frac{T_s - T}{T}}$$

Messungen an einem 2,5 l Turbodiesel haben diese Überlegung bestätigt. Danach verbleiben bei 50W elektrischer Leistung für die Ionenbildung bei 250°C etwa 3g, bei 300°C etwa 2g und bei 400°C etwa 1g Ruß im Filter nach beliebig langen Probeläufen zurück. Diese Mengen sind aber vernachlässigbar gering.

Durch diese Maßnahmen kommt es zu einer sehr weitgehenden Abscheidung der Aerosole, bzw. des Rußes. Durch das angelegte elektrische Feld kommt es zu einer Bildung der Radikalen und gleichzeitig zur Abscheidung des Rußes, wodurch die Verbrennung des Rußes bei niedrigen Temperaturen weiter gefördert wird. Dabei kann der Ruß des Abgases vor dem Eintritt in das quer zum Abgasstrom verlaufenden elektrischen Feldes elektrisch aufgeladen werden, z.B. mittels Sprühelektroden.

In einer bevorzugten Variante des Verfahrens werden die im Abgas enthaltenen Rußteilchen vor dem Eintreten in den Kanal des Keramikkörpers durch eine Entladungselektrode negativ aufgeladen. Dies erleichtert die Abscheidung im Kanal des Keramikkörpers.

Es ist vorteilhaft, die elektrische Spannung so hoch zu wählen, daß im Kanal des Keramikkörpers durch das hohe elektrische Feld eine Entladung und zwar durch Auslösung von Feldelektronen an der Keramikwand stattfindet. Dabei wird ein optimaler Arbeitspunkt des Filters erreicht.

Vorzugsweise werden die Abgase zunächst durch einen Ionisationskanal und dann durch mindestens einen Abscheidekanal geleitet. Dadurch können sowohl für die Ionisierung als auch für das Abscheiden optimale Bedingungen eingestellt werden.

Besonders günstig ist es, wenn sowohl der Ionisationskanal als auch die Abscheidekanäle als beidseitig offene Kanäle in einem einzelnen Keramikkörper angeordnet sind. Dann ist eine besonders platzsparende Ausführung möglich.

Es kann vorgesehen sein, daß die Potentialdifferenz der elektrischen Felder zwischen 3 und 30 kV, vorzugsweise zwischen 5 und 20 kV liegt. Insbesonders soll die Feldstärke der elektrischen Felder zwischen 100 und 1000 V/mm, vorzugsweise zwischen 200 und 500 V/mm liegen. Damit wird eine optimale Abscheiderate erzielt.

In einer Variante des erfindungsgemäßen Verfahrens kann zeitweise ein Katalysator in luftgetragener Form in den Abgasstrom eingebracht werden. Die Langzeitwirksamkeit des erfindungsgemäßen Filters kann dadurch erheblich verbessert werden, daß zeitweise ein Katalysator in luftgetragener Form in den Abgasstrom eingebracht wird. Dies kann im einfachsten Fall betriebsmäßig durch einen mitgeführten Vorratsbehälter erfolgen, aus dem laufzeitgesteuert etwa alle 50 Betriebsstunden des Motors eine gewisse Menge des Katalysators in Form eines Aerosols abgegeben wird. Während des Einbringens des Katalysators wird vorzugsweise die Polarität des elektrischen Feldes gewechselt.

Vorzugsweise wird der Katalysator dann eingebracht, wenn die Temperatur des Abgasstromes über eine Zeit t hinweg kleiner als A°C ist, wobei t zwischen 20 und 60 Minuten liegt und A kleiner als 500°C, vorzugsweise kleiner als 300°C ist. Gerade durch längeren Betrieb bei niedrigen Temperaturen kann eine Erneuerung der Katalysatorschicht erforderlich werden. Durch die temperaturabhängige Regelung können optimale Abscheidegrade bei niedrigen Zugabemengen des Katalysators erreicht werden.

Es ist günstig, wenn die Polarität der Elektroden zeitweise zur Reinigung umgepolt wird. Es kann nach längeren Betriebszeiten zu einer störenden Rußablagerung auf der Seite der negativen Elektrode kommen. Durch kurzzeitige positive Ladung wird diese mit negativen Teilchen bombardiert und somit gereinigt.

Weiters betrifft die Erfindung eine Vorrichtung zur Reinigung von Abgasen, insbesonders von Dieselmotorabgasen, mit einem Keramikkörper mit mindestens einem Kanal, der vom Abgas durchströmbar ist, mit Elektroden zur Erzeugung eines elektrischen Feldes, das den Keramikkörper durchsetzt und quer zur Achse der Kanal orientiert ist. Diese Vorrichtung ist dadurch gekennzeichnet, daß eine die Geometrie des Querschnittes der Kanäle und den spezifischen elektrischen Widerstand des Materials des Keramikkörpers berücksichtigende Kennzahl E, die der folgenden Beziehung

$$E = \frac{\rho \cdot \beta}{d}$$

entspricht, mindestens $10^7$ $\Omega$, vorzugsweise mindestens $10^8$ $\Omega$ beträgt. o stellt dabei den spezifischen elektrischen Widerstand des Keramikmaterials bei 600°C in $\Omega$ cm dar, β einen geometrischen Formfaktor und d die Breite bzw. Dicke der die Kanäle trennenden Wände in cm. Der geometrische Formfaktor β ergibt sich aus der folgenden Beziehung:

$$\beta = \frac{1}{x}$$

wobei 1 die durchschnittliche Länge des im Keramikmaterial ausgebildeten Strompfades zwischen den Elektroden und x den Abstand zwischen den Elektroden darstellt. Bei widerstandsmäßig parallel geschalteten Armen der die Kanäle trennenden Wände ist für d entsprechend die Summe der Breiten einzusetzen. Die Kennzahl E ist somit der elektrische Widerstand, bezogen auf die Längenabmessung und den Elektrodenabstand.

Auf diese Weise ergeben sich entsprechend lange Strompfade für die sich aufgrund des endlichen spezifischen Widerstandes des Materials des Keramikkörpers ausbildenden Ströme, wobei sich eine solche Struktur auch durch eine sehr gute mechanische Festigkeit auszeichnet. Weiters ist sichergestellt, daß die geometrische Form des Querschnittes der Kanäle des Keramikkörpers, der vorzugsweise als Monolith aufgebaut ist, und die Materialparameter des Keramikkörpers aufeinander abgestimmt sind, wobei durch die Einhaltung des angegebenen unteren Grenzwertes der Kennzahl bei einer elektrischen Feldstärke von ca. 10kV/cm eine genügende Sprühentladung und oder Autoionisation sichergestellt ist, um ein Verbrennen des abgelagerten Russes im Bereich von 200 bis 500°C zu gewährleisten. Es ist jedoch gleichwohl möglich, den Keramikkörper aus mehreren Teilen zusammenzusetzen.

Mit höher werdender Kennzahl vermindert sich die zum Abbrennen des Russes erforderliche Temperatur und kann bis unter 150°C absinken, wobei bei Kennzahlen von ca. $4 \cdot 10^8$ die Feldstärke auf bis zu 5kV/cm vermindert werden kann, wodurch sich der Energiebedarf des Filters vermindert.

Durch die Ausbildung möglichst niedriger Kanäle ergeben sich in den Kanälen sehr hohe Feldstärken, bei denen es zu einem kräftigen Ladungssprühen und damit zur Bildung von $O^-$ und $O_2^-$ Ionen kommt. Gleichzeitig weist ein solcher Keramikkörper einen sehr hohen Widerstand auf, wodurch sich ein nur geringer Energiebedarf des Filters ergibt.

Nach einem weiteren Merkmal der Erfindung kann vorgesehen sein, daß die zwischen in Feldrichtung aneinander angrenzenden Reihen von Kanälen angeordneten Wände im Zick-Zack verlaufen, wobei die in Feldrichtung voneinander beabstandeten und einander gegenüberliegenden je einen Kanal begrenzenden Wandabschnitte gegen eine senkrecht zur Feldrichtung stehende Ebene oder Zylinderebene gegenläufig geneigt sind.

Durch diese Maßnahmen ergibt sich eine weitere Verlängerung der Strompfade, wobei sich im Falle einer Gestaltung des Querschnittes der Kanäle in der Weise, daß diese die Kanäle in deren Mitte die größte Höhe in Richtung des Feldes aufweisen, ein über die Breite der Kanäle weitgehend gleichmäßiges elektrisches Feld ergibt. Dazu ist es lediglich notwendig, die Neigung der die benachbarten Reihen von Kanälen trennenden Wände gegen eine senkrecht zur Feldrichtung stehende Ebene entsprechend den Materialparametern zu wählen. In jedem Falle tritt aber eine Vergleichmäßigung der Feldverteilung über die Breite der Kanäle verglichen mit im Querschnitt rechteckigen Kanälen ein, sodaß über den gesamten Querschnitt eine Autoionisation sichergestellt werden kann. Bei einer Ausgestaltung des Querschnittes der Kanäle in der Weise, daß diese in deren Mitte ihre kleinste Höhe aufweisen, ergibt sich in diesem Bereich ein besonders starkes Feld, das aber gegen die seitlichen Randbereiche des Kanales zu stark abfällt. Dabei wird die Ausbildung eines Ladungssprühens, allerdings im wesentlichen auf den Mittelbereich des Kanales beschränkt, begünstigt.

Weiters kann vorgesehen sein, daß die Wände des Keramikkörpers, die die in Feldrichtung gemessene Höhe der Kanäle bestimmen, abschnittsweise in einem Winkel zur Feldrichtung verlaufen. Durch diese Maßnahmen läßt sich eine sehr weitgehende Verlängerung der Strompfade, und damit eine Erhöhung des Widerstandes des Keramikkörpers erreichen. Eine solche Erhöhung des Widerstandes des Keramikkörpers ermöglicht auch den Einsatz eines solchen Filters bei höheren Temperaturen, ohne daß es dabei zu einem überhöhten Energiebedarf des Filters kommt. Dabei kann vorgesehen sein, daß die die Höhe der Kanäle bestimmenden Wände mäanderförmig gestaltet oder im wesentlichen schlangenlinienförmig ausgebildet sind.

Weiters kann auch vorgesehen sein, daß die die Höhe der Kanäle in Feldrichtung bestimmenden Wände abschnittsweise im wesentlichen senkrecht zu dieser verlaufen, wodurch sich sehr lange Wege des Strompfades ergeben, insbesondere wenn die Kanäle in Feldrichtung aneinander angrenzenden Reihen von Kanälen gegeneinander versetzt angeordnet sind.

Nach einem weiteren Merkmal der Erfindung kann vorgesehen sein, daß die Innenwände der Kanäle eine Oberflächenrauhigkeit von mindestens 1μm, vorzugsweise von mehr als 2μm aufweisen. Durch die relativ rauhen Oberflächen der Innenwände der Kanäle wird das Ladungssprühen begünstigt und dadurch die Bildung von $O_2^-$ und $O^-$ Ionen verbessert.

Bei einer Einrichtung zur Durchführung des erfindungsgemäßen Verfahrens mit einem Filter zur Abscheidung der Aerosole, kann nach einem weiteren Merkmal der Erfindung vorgesehen sein, daß eine Einrichtung zum Transport des abgeschiedenen Rußes in den Bereich zu einer an einem negativen Potential liegenden Entladungselektrode, die in einem mit einer Luftzufuhr versehenen Raum angeordnet ist. Auf diese Weise ist sichergestellt, daß der abgeschiedene Ruß in den Bereich der Entladungselektrode und damit der dort entstehenden Radikale kommt und in diesem Bereich bereits bei niedrigen Temperaturen, von z.B. 150°C verbrennt.

Dabei kann weiters vorgesehen sein, daß die Einrichtung zum Transport des abgeschiedenen Rußes durch ein bewegbares, vorzugsweise ein drehbares Filter aus faserigem Material gebildet ist. Auf diese Weise ergibt sich eine sehr einfache Konstruktion der Einrichtung.

Weiters kann vorgesehen sein, daß die Einrichtung zum Transport des abgeschiedenen Rußes durch ein abgeschiedene Rußpartikel mitreißendes Gebläse gebildet ist.

Bei einer weiteren Einrichtung zur Durchführung des erfindungsgemäßen Verfahrens kann vorgesehen sein, daß parallel zur Strömungsrichtung und im wesentlichen auch zueinander Hochspannungselektroden angeordnet sind, die an einem zwischen diesen angeordneten Keramikkörper mit in dessen Längsrichtung verlaufenden, beidseitig offenen Kanälen anliegen und im Querschnitt des Keramikkörpers gesehen, die Länge der Wände der Kanäle zwischen zwei voneinander abgekehrten Verbindungspunkten von die Höhe eines Kanales in Richtung des durch die Hochspannungselektroden aufgebauten elektrischen Feldes bestimmenden Wänden mit den übrigen, den gleichen Kanal begrenzenden Wänden größer ist, als der in Feldrichtung gemessene Normalabstand dieser Verbindungspunkte voneinander, wobei die elektrische Feldstärke bei Zimmertemperatur im Bereich von 10 bis 20kV/cm beträgt.

Durch diese Maßnahmen wird erreicht, daß es in den einzelnen Kanälen zur Autoionisation des durchströmenden Abgases kommt, wobei aus dem im Abgas enthaltenen Sauerstoff $O_2^-$ und $O^-$ Radikale gebildet werden und gleichzeitig der Ruß abgeschieden wird. Dieser abgeschiedene Ruß wird aber von den Radikalen bereits bei Temperaturen zwischen ca. 100 und 300°C verbrannt. Um die Abscheidung der Aerosole, insbesondere des Rußes zu beschleunigen, kann der Einrichtung zur elektrostatischen Abscheidung stromauf eine Entladungselektrode vorgeschaltet sein, die zur Aufladung der Aerosole, bzw. des Rußes dient.

Im folgenden wird die Erfindung anhand eines in den Figuren dargestellten Ausführungsbeispieles näher erläutert.

Die Erfindung wird nun anhand der Zeichnung näher erläutert. Dabei zeigen:

Fig. 1 schematisch eine erfindungsgemäße Einrichtung,

Fig. 2 schematisch einen Querschnitt durch eine Einrichtung, die eine Bildung von Radikalen mittels Autoionisation ermöglicht.

Fig. 3 und 4 Querschnitte verschiedener Ausführungsformen von Keramikkörpern für erfindungsgemäße Filter, und

Fig. 5a bis 5d verschiedene Beispiele der Gestaltung der die Höhe der Kanäle bestimmenden Wände.

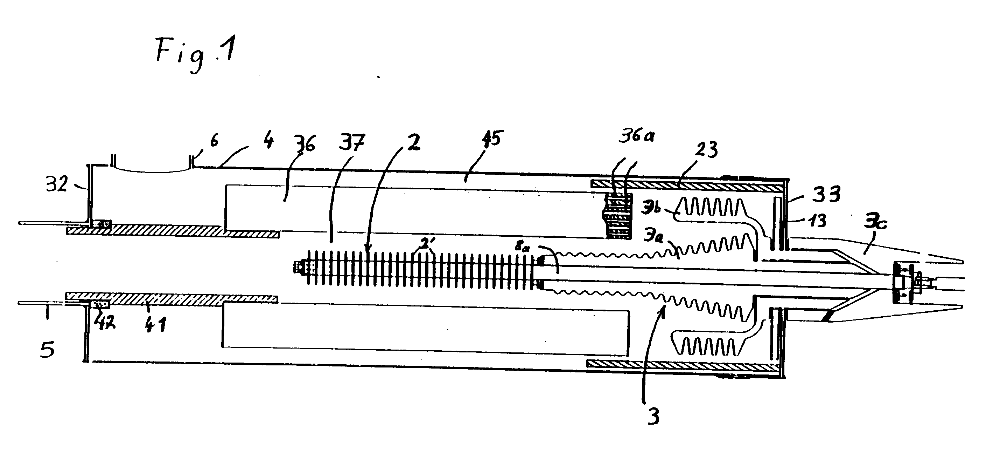

Bei der Ausführungsvariante von Fig. 1 ist vorgesehen, daß der Abgasfilter aus einem im wesentlichen zylindrischen Gehäuse 4 besteht, das an den Stirnseiten mit Deckeln 32 und 33 abgeschlossen ist. Im Inneren ist ein keramischer Wabenkörper 36 angeordnet, der in seinem Querschnitt kreisringförmig ist. Dieser keramische Wabenkörper 36 kann auch aus mehreren Kreisringsegmenten zusammengesetzt sein. Zentral im Wabenkörper 36 ist der Ionisationskanal 37 angeordnet. In diesen Ionisationskanal 37 ragt die Elektrode 2, die aus einer Vielzahl von Sprühelektroden 2' zusammengesetzt ist.

Das zu reinigende Gas strömt durch einen im Deckel 32 angeordneten Rohrstutzen 5 in den Filter. In der Verlängerung des Stutzens 5 ist ein Keramikrohr 41 vorgesehen, das an einem Ende mit einer Dichtung 42 gegenüber dem Deckel 32 abgedichtet ist. Am anderen Ende steht das Rohr 41 mit dem Ionisationskanal 37 des Wabenkörpers 36 in Verbindung. Am Ende des Ionisationskanales 37 wird das Abgas umgelenkt und strömt durch die Abscheidekanäle 36a.

Die Elektrode 2 wird von einer Hochspannungsdurchführung 3 bestehend aus den Teilen 3a, 3b und 3c gehalten, die zur Isolierung der Hochspannung führenden Teile gegenüber dem geerdeten Gehäuse 4 samt Deckel 33 dient. An der Außenseite ist der Keramikkörper 36 mit einer thermischen Isolationsschicht 45 versehen, die aber einen elektrischen Kontakt sicherstellt und auch zur Abstützung gegenüber dem Gehäuse 4 dient. Die gereinigten Abgase verlassen den Filter über einen am Umfang des Gehäuses 1 angeordneten Austrittsstutzen 6.

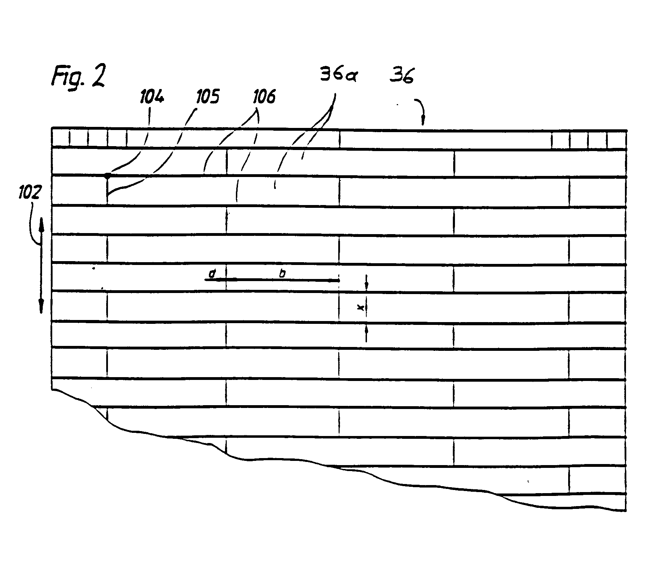

Wie aus der Fig. 2 zu ersehen ist, weist der Keramikkörper 36 eine Wabenstruktur auf, wobei die in Feldrichtung 102 aneinander angrenzenden Reihen von Kanälen 36a gegeneinander versetzt angeordnet sind. Die Verbindungspunkte 104 der in Richtung 102 des Feldes verlaufenden Wände 105 mit den übrigen einen Kanal 36a begrenzenden Wänden 106, die bei der Ausführungsform nach der Fig. 2 senkrecht zum Feld 102 verlaufen, stellen gleichzeitig die Anschlußpunkte für den einen Kanal 36a umgebenden Strompfad dar. Die geometrische Länge 1 dieses Strompfades, der sich aufgrund des endlichen spezifischen Widerstandes des Materials des Keramikkörpers 1 und der an den nicht dargestellten Hochspannungselektroden anliegenden Spannung ausbildet, entspricht der folgenden Beziehung:

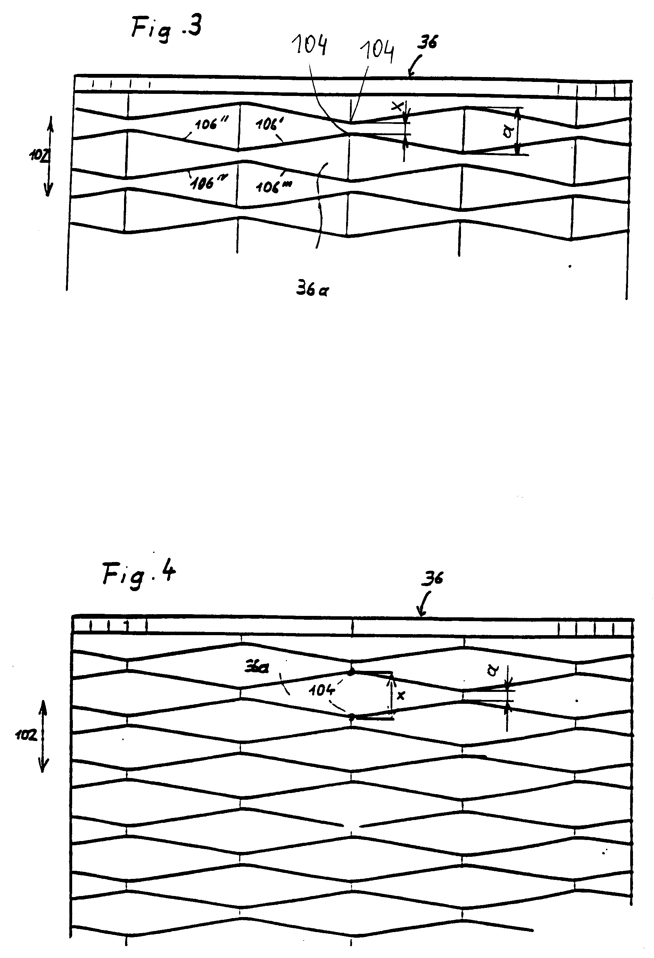

Die Ausführungsform nach der Fig. 3 unterscheidet sich dadurch von jener nach der Fig. 2, daß die Wände 106', 106''; 106''', 106IV, die die Reihen von Kanälen 36a voneinander trennen, Zick-Zack verlaufen, wobei die in Feldrichtung voneinander beabstandeten und einander gegenüberliegenden Wände 106', 106'''; 106'', 106IV eines Kanales 36a zu einer senkrecht zur Feldrichtung 2 stehenden Ebene gegenläufig geneigt verlaufen. Bei dieser Ausführungsform ergibt sich verglichen mit der Ausführungsform nach der Fig. 2 eine weitere Verlängerung der Strompfade, wobei sich der Formfaktor β nach der Formel

$$\beta = \frac{2 \cdot b + a}{x}$$

errechnet, wobei a > x ist.

Bei dieser Ausführungsform ergibt sich im mittleren Bereich des Querschnittes der Kanäle 36a eine hohe Feldstärke, die jedoch sehr inhomogen über die Breite der Kanäle 36a verteilt ist. Es kommt daher in den mittleren Bereichen des Querschnittes der Kanäle 36a schon bei relativ geringen Feldstärken im Keramikkörper von z.B. 5 kV/cm zu einem Ladungssprühen und damit zur Bildung von $O^-$ und $O_2^-$ Ionen, die ein Abbrennen des am Filter anliegenden Russes bei relativ niedrigen Temperaturen von 300°C und darunter ermöglichen.

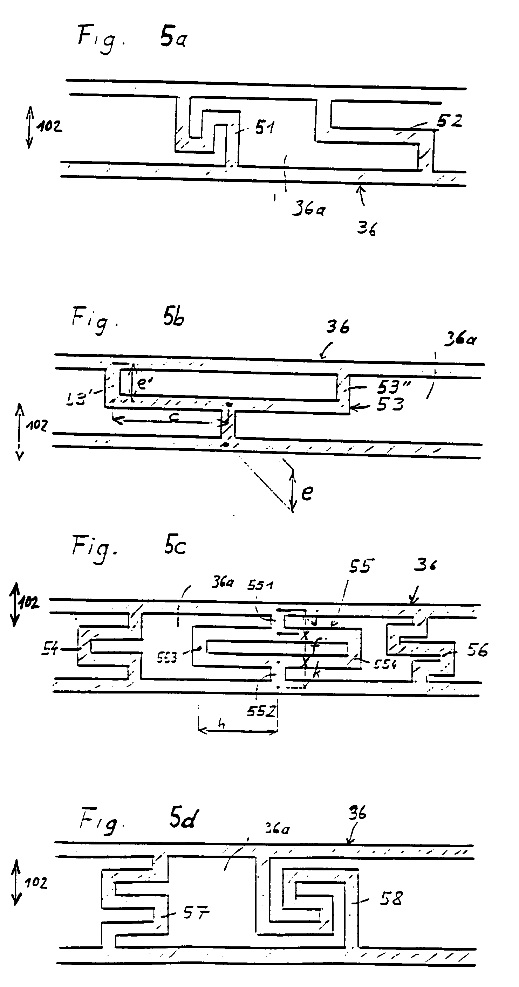

Die Ausführungsform nach der Fig. 4 unterscheidet sich von jener nach der Fig. 3 lediglich dadurch, daß die in Richtung des Feldes 102 verlaufenden Wände 105 kürzer als der Normalabstand x der Verbindungspunkte 104 ist.

Dadurch ergibt sich zwar gegenüber der Ausführungsform nach der Fig. 3 bei sonst gleichen Abmessungen ein kleinerer geometrischer Formfaktor β, doch ergibt sich im Inneren eines jeden Kanales 36a ein weitgehend homogenes elektrisches Feld. Dies hängt im wesentlichen von der Wahl des Winkels den die Wände 106', 106'', 106''', 106$^{IV}$ mit einer senkrecht zur Feldrichtung stehenden Ebene einschließen und dem spezifischen Widerstand des Materials des Keramikkörpers 36 ab.

Die in den Fig. 5a bis 5d dargestellten Varianten zielen im wesentlichen auf eine Verlängerung der Strompfade durch eine abschnittsweise Führung der die Höhe der Kanäle 36a bestimmenden Wände in einem Winkel zur Feldrichtung 102 ab.

In der Fig. 5a sind zwei Varianten der Ausbildung einer den Abstand der senkrecht zur Feldrichtung bestimmenden Wände dargestellt. Dabei verläuft die Wand 51 im wesentlichen schlagenlinienförmig und weist somit senkrecht zur Feldrichtung 102 verlaufende Abschnitte auf, wie leicht zu ersehen ist.

Die Wand 52 ist dagegen abgesetzt und weist eine senkrecht zur Feldrichtung 102 verlaufenden Mittelteil auf.

Bei beiden Ausführungsformen der Wände 51, 52, ist als deren im Querschnitt ersichtliche Länge in die Berechnung des Formfaktors einzubeziehen.

Bei der Ausführungsform nach der Fig. 5b ist die Wand 53 abschnittsweise in zwei parallel laufende Arme 53', 53'' aufgeteilt. Die in die Berechnung des Formfaktors β einzubeziehende Länge a der Wand 53 errechnet sich dabei nach der Formel

$$a = e + \frac{e' + c}{2}$$

Dabei ist vorausgesetzt, daß die verschiedenen Abschnitte der Wand 53 gleiche Dicke d aufweisen und die sich zu beiden Seiten des Abschnittes 53''' erstreckenden Abschnitte der Wand 53$^{IV}$ gleich lang sind.

In der Fig. 5c ist ebenfalls eine Wand 55 dargestellt, die abschnittsweise in parallele Zweige 553, 554 aufgespalten ist, zu welchem Abschnitt zwei weitere Abschnitte 551, 552 in Reihe geschaltet sind.

Bei einer solchen Wand 55 errechnet sich die in die Formel für den Formfaktor β einzusetzende Länge a nach der Formel:

$$a = j + k + \frac{f + 2 \cdot h}{2}$$

Dabei ist vorausgesetzt, daß die Wände gleiche Dicke d aufweisen und die Wandteile 551, 552 symmetrisch zu den Wandteilen 553, 555 angeordnet sind. Andernfalls müßten die Reziprokwerte der sich zwischen den Verbindungspunkten der Wandteile 551, 552 mit den Wandteilen 553, 555 auf beiden Wegen ergebenden Reziprokwerte der Längen addiert und aus diesem Wert die Ersatzlänge für den zwischen den Wandteilen 551, 552 liegenden Abschnitt, ähnlich der Ermittlung eines Ersatzwiderstandes von parallelgeschalteten Widerständen, errechnet werden, zu dem dann die Längen j und k zur Ermittlung der Gesamtlänge a des Strompfades zu addieren sind.

Bei den im wesentlichen in Schlangenlinien verlaufenden Wänden 54 und 56 ist ebenso wie bei der Wand 52 und 51 nach der Fig. 5a die mittlere Länge dieser Wände in die Berechnung des Formfaktors β einzusetzen.

Gleiches gilt auch bezüglich der Wände 57 und 58 nach der Fig. 5d, wobei die letztere Wand mäanderförmig verläuft.

Für die Erzielung einer ausreichenden Autoionisation oder eines Ladungssprühens im Inneren der Kanäle ist auch der Widerstand der sich im Keramikkörper 36 ausbildenden Strompfade wesentlich.

Um nun bei einem ausreichend niedrigen Energiebedarf eine weitgehende Abscheidung und Verbrennung der Rußpartikel aus einem Abgasstrom sicherzustellen, ist es wesentlich, daß die sich aus der folgenden Formel ergebende Kennzahl E

$$E = \frac{\rho \cdot \beta}{d}$$

mindestens $10^7$, vorzugsweise mindestens $10^8$ beträgt, wobei ρ den spezifischen elektrischen Widerstand des Keramikmaterials bei 600°C in cm, β einen geometrischen Formfaktor und d die Breite bzw. Dicke der die Kanäle (36a) trennenden Wände in cm bedeuten, und sich der geometrische Formfaktor β aus der folgenden Beziehung ergibt:

$$\beta = \frac{1}{x}$$

wobei 1 die Länge des sich aufgrund der an den Hochspannungselektroden angelegten Spannung und dem endlichen spezifischen Widerstandes des Keramikmaterials ausbildenden Strompfades zwischen zwei voneinander abgekehrten Verbindungspunkten 104, 104' der die Höhe in Feldrichtung 102 der Kanäle bestimmenden Wände eines Kanales 36a mit den übrigen den selben Kanal begrenzenden, sich vorzugsweise im wesentlichen senkrecht zur Feldrichtung erstreckenden Wänden 106, wobei bei abschnittsweise in mehrere Arme 53, 53', 553, 554 aufgespaltenen Wänden 53, 55 diese Arme, die widerstandsmäßig eine Parallelschaltung darstellen, ihren Widerständen entsprechend zu berücksichtigen und mit der dem Ersatzwiderstand der Arme entsprechenden Länge der übrigen Wand einzusetzen sind, und x den in Feldrichtung gemessenen Normalabstand dieser Verbindungspunkte 104' bedeuten.

## Patentansprüche

1. Verfahren zur Reinigung von Abgasen, insbesonders von Dieselmotorabgasen, bei dem die Abgase durch Kanäle (36a) eines Keramikkörpers (36) hindurchgeleitet werden, in welchen Kanälen (36a) ein elektrisches Feld im wesentlichen quer zur Strömungsrichtung aufgebaut wird, dadurch gekennzeichnet, daß

   a) in den Kanälen des Keramikkörpers durch das hohe elektrische Feld freie Elektronen gebildet werden,
   b) das hohe elektrische Feld die Elektronen in Richtung zur Kanalwand beschleunigt,
   c) durch die Wahl der geringen Abmessungen der Kanäle die Elektronen frei bleiben, und
   d) bei den an den Wänden der Kanäle angelagerten Rußteilchen durch die freien Elektronen und auch durch an Sauerstoff angelagerte Elektronen eine Oxidation der Rußteilchen eingeleitet wird.

2. Verfahren nach Anspruch 1, dadurch gekennzeichnet, daß die im Abgas enthaltenen Rußteilchen vor dem Eintreten in die Kanäle (36a) des Keramikkörpers (36) durch eine Entladungselektrode (2) negativ aufgeladen werden.

3. Verfahren nach einem der Ansprüche 1 bis 2, dadurch gekennzeichnet, daß die Abgase zunächst durch einen Ionisationskanal (37) und dann durch Abscheidekanäle (36a) geleitet werden.

4. Verfahren nach einem der Ansprüche 1 bis 3, dadurch gekennzeichnet, daß die Feldstärke der elektrischen Felder in den Kanälen (36a) zwischen 100 und 1000 V/mm, vorzugsweise zwischen 200 und 500 V/mm eingestellt wird.

5. Vorrichtung zur Reinigung von Abgasen, gemäß dem Verfahren nach einem der Ansprüche 1 bis 4, mit einem Keramikkörper (36) mit vom Abgas durchströmbaren Kanälen (36a), mit Elektroden (2) zur Erzeugung eines elektrischen Feldes, das den Keramikkörper (36) durchsetzt und quer zur Achse der Kanäle (36a) orientiert ist, dadurch gekennzeichnet, daß die Feldstärke der elektrischen Felder in den Kanälen (36a) zwischen 100 und 1000 V/mm, vorzugsweise zwischen 200 und 500 V/mm liegt und daß eine Kennzahl E, die die Geometrie des Querschnittes der Kanäle (36a) und den spezifischen elektrischen Widerstand des Materials des Keramikkörpers (36) berücksichtigt und die der folgenden Beziehung

$$E = \frac{\rho \cdot \beta}{d}$$

entspricht, mindestens $10^7\,\Omega$, vorzugsweise mindestens $10^8\,\Omega$ beträgt. $\rho$ stellt dabei den spezifischen elektrischen Widerstand des Keramikmaterials bei 600°C in $\Omega$ cm dar, $\beta$ einen geometrischen Formfaktor und d die Breite bzw. Dicke der die Kanäle (36a) trennenden Wände in cm. Der geometrische Formfaktor $\beta$ ergibt sich aus der folgenden Beziehung :

$$\beta = \frac{1}{x}$$

wobei 1 die durchschnittliche Länge des im Keramikmaterial ausgebildeten Strompfades zwischen den Elektroden (2) und x den Abstand zwischen den Elektroden (2) darstellt.

6. Vorrichtung nach Anspruch 5, mit einer Vorrichtung zur elektrostatischen Abscheidung von Rußpartikeln, insbesondere aus Dieselabgasen, bei der parallel zur Strömungsrichtung und im wesentlichen auch zueinander Hochspannungselektroden (2) angeordnet sind, dadurch gekennzeichnet, daß die Hochspannungselektroden (2) an einem zwischen diesen angeordneten Keramikkörper (36) mit in dessen Längsrichtung verlaufenden, beidseitig offenen Kanälen (36a) anliegen und im Querschnitt des Keramikkörpers (36) gesehen, die Länge der Wände der Kanäle (36a) zwischen zwei voneinander abgekehrten Verbindungspunkten (104) von die Höhe eines Kanales (36a) in Richtung des durch die Hochspannungselektroden (2) aufgebauten elektrischen Feldes bestimmenden Wänden (105) mit den übrigen, den gleichen Kanal (36a) begrenzenden Wänden (106) größer ist, als der in Feldrichtung gemessene Normalabstand dieser Verbindungspunkte (104) voneinander, wobei die elektrische Feldstärke bei Zimmertemperatur im Bereich von 10 bis 20kV/cm beträgt.

7. Vorrichtung nach Anspruch 5 oder 6, dadurch gekennzeichnet, daß die zwischen in Feldrichtung aneinander angrenzenden Reihen von Kanälen (36a) angeordneten Wände (6', 6", 6"', 6$^{IV}$) im Zick-Zack verlaufen, wobei die in Feldrichtung (102) voneinander beabstandeten und einander gegenüberliegenden je einen Kanal (36a) begrenzenden Wandabschnitte (6', 6"'; 6", 6$^{IV}$) gegen eine senkrecht zur Feldrichtung stehende Ebene oder Zylinderebene gegenläufig geneigt sind.

8. Vorrichtung nach Anspruch 5 oder 6, dadurch gekennzeichnet, daß die Wände (51 bis 58) des Keramikkörpers (36) , die die in Feldrichtung gemessene Höhe der Kanäle (36a) bestimmen, abschnittsweise in einem Winkel zur Feldrichtung (102) verlaufen.

9. Vorrichtung nach Anspruch 6, dadurch gekennzeichnet, daß die die Höhe der Kanäle (36a) bestimmenden Wände (58) mäanderförmig gestaltet oder im wesentlichen schlangenlinienförmig ausgebildet sind.

10. Vorrichtung nach einem der Ansprüche 5 bis 8, dadurch gekennzeichnet, daß neben den als Abscheidekanälen (36a) ausgebildeten Kanälen mindestens ein beidseitig offener Ionisationskanal (37) vorgesehen ist.

11. Vorrichtung nach Anspruch 10, dadurch gekennzeichnet, daß der Ionisationskanal (37) im wesentlichen parallel zu den Abscheidekanälen (36a) angeordnet ist.

12. Vorrichtung nach einem der Ansprüche 10 bis 11, dadurch gekennzeichnet, daß der Keramikkörper im wesentlichen zylindrisch aufgebaut ist, wobei der Ionisationskanal (37) im Bereich der Zylinderachse angeordnet ist und die Abscheidekanäle (36a) um den Ionisationskanal (37) angeordnet sind.

13. Vorrichtung nach einem der Ansprüche 10 bis 12, dadurch gekennzeichnet, daß die Wände der Abscheidekanäle (36a) mit einem Katalysator beschichtet sind, der die Oxidation von Kohlenwasserstoffen begünstigt.

14. Vorrichtung nach einem der Ansprüche 5 bis 13, dadurch gekennzeichnet, daß der Keramikkörper aus mindestens zwei Platten gebildet ist, die quer zur Feldrichtung angeordnet sind und daß die Kanäle aus den Zwischenräumen zwischen den Platten bestehen.

15. Vorrichtung nach einem der Ansprüche 5 bis 14, dadurch gekennzeichnet, daß die Innenwände der Kanäle (36a) eine Oberflächenrauhigkeit von mindestens 1 µm, vorzugsweise von mehr als 2 µm aufweisen.

**Claims**

1. A method for cleaning exhaust gases, especially those of diesel engines, in which the exhaust gases are guided through channels (36a) of a ceramic body (36) where an electric field is generated substantially transversely to the direction of flow, **characterized in that**
   a) free electrones are formed in the channels of the ceramic body by the high electric field;
   b) the high electric field accelerates the electrones in the direction to the channel wall;
   c) the electrones remain free due to selecting low dimensions of the channels; and
   d) an oxidation of the soot particles attached to the channel walls is initiated by the free electrones and also by electrones adhering to oxygen.

2. A method in accordance with claim 1, **characterized in that** the soot particles contained in the exhaust gas are negatively charged by a discharge electrode (2) before entering the channels (36a) of the ceramic body (36).

3. A method in accordance with one of the claims 1 to 2, **characterized in that** the exhaust gases are at first guided through an ionization channel (37) and then through separation channels (36a).

4. A method in accordance with one of the claims 1 to 3, **characterized in that** the field strength of the electric fields in the channels (36a) is set between 100 and 1000 V/mm, preferably between 200 and 500 V/mm.

5. Device for cleaning exhaust gases in accordance with the method of claims 1 to 4, with a ceramic body (36) comprising channels (36a) through which exhaust gases can flow, with electrodes (2) for generating an electric field penetrating the ceramic body (36) and being orientated transversely to the axis of the channels (36a), **characterized in that** the field strength of the electric fields in the channels (36a) is between 100 and 1000 V/mm, preferably between 200 and 500 V/mm, and that a characteristic number E which takes into account the geometry of the cross section of the channels (36a) and the specific electric resistance of the material of the ceramic body (36) and which is equivalent to the following relation

$$E = \frac{\rho \cdot \beta}{d}$$

is at least $10^7$ $\Omega$, preferably at least $10^8$ $\Omega$. $\rho$ con-

stitutes the specific electric resistance of the ceramic material at 600°C in Ω cm, β constitutes a geometric form factor and d the width or thickness of the walls separating the channels (36a) in cm. The geometric form factor β is a result of the following relation:

$$\beta = \frac{1}{x}$$

whereby 1 is the average length of the current path formed in the ceramic material between the electrodes (2) and x is the distance between the electrodes (2).

6. Device in accordance with claim 5, with a device for the electrostatic separation of soot particles, in particular those from diesel exhaust gases, in which high-voltage electrodes (2) are arranged parallel to the direction of flow and substantially also towards each other, **characterized in that** the high-voltage electrodes (2) sit close to a ceramic body (36) disposed between them, whereby the body (36) comprises channels (36a) extending in the longitudinal direction and being open on both sides and, as seen alongside the cross section of the ceramic body (36), the length of the walls of the channels (36) between two connecting points (104) opposed from one another of walls (105) determining the height of the channel (36a) in the direction of the electric field as built up by the high voltage electrodes (2) with the other walls (106) that limit the same channel is bigger than the normal distance of said connecting points (104) between one another as measured in the direction of the field, whereby the electric field strength is within the magnitude of 10 to 20 kV/cm at room temperature.

7. Device in accordance with claim 5 or 6, **characterized in that** the walls (6' ,6", 6''', 6[IV]) arranged between the rows of channels (36a) adjacent to one another in the direction of the field extend zigzag-like, whereby the wall sections (6', 6", 6''', 6[IV]) which are disposed at a distance from one another in the direction of the field (102) and opposite of one another and each limiting a channel (36a) are opposedly inclined to a plane or cylinder plane which is vertical to the direction of the field.

8. Device in accordance with claim 5 or 6, **characterized in that** the walls (51 to 58) of the ceramic body (36) determining the height of the channels (36a) as measured in the direction of the fiels extend sectionwise at an angle to the direction of the field (102).

9. Device in accordance with claim 6, **characterized in that** the walls (58) determining the height of the channels (36a) are arranged meander-like or substantially serpentine-like.

10. Device in accordance with one of the claims 5 to 8, **characterized in that** in addition to the channels arranged as separation channels (36a) there is provided at least one ionization channel (37) which is open on both sides.

11. Device in accordance with claim 10, **characterized in that** the ionization channel (37) is substantially parallel to the separation channels (36a).

12. Device in accordance with one of the claims 10 to 11, **characterized in that** the ceramic body has a substantially cylindrical arrangement, whereby the ionization channel (37) is arranged in the area of the cylinder axis and that the separation channels (36a) are arranged around the ionization channel (37).

13. Device in accordance with one of the claims 10 to 12, **characterized in that** the walls of the separation channels (36a) are coated with a catalyst which favours the oxidation of hydrocarbons.

14. Device in accordance with one of the claims 5 to 13, **characterized in that** the ceramic body consists of at least two plates arranged transversely to the direction of the field and that the channels consist of the intermediate spaces between the plates.

15. Device in accordance with one of the claims 5 to 14, **characterized in that** the inner walls of the channels (36a) have a surface roughness of at least 1 μm, preferably more than 2μm.

## Revendications

1. Procédé d'épuration de gaz d'échappement, notamment de gaz d'échappement de moteurs diesel, selon lequel les gaz d'échappement circulent dans des canaux (36a) d'un corps céramique (36), canaux (36a) dans lesquels un champ électrique est établi sensiblement transversalement par rapport à la direction d'écoulement, caractérisé en ce que

a) des électrons libres sont formés par le champ électrique intense dans les canaux du corps céramique,

b) le champ électrique intense accélère les électrons en direction ver la paroi des canaux,

c) les électrons restent libres en raison du choix des faibles dimensions des canaux, et

d) dans le cas où des particules de suie se déposent sur les parois des canaux, les électrons libres et également des électrons accumulés au niveau de l'oxygène déclenchent une oxydation des particules de suie.

2. Procédé selon la revendication 1, caractérisé en ce que les particules de suie contenues dans les gaz d'échappement sont chargées négativement par une électrode de décharge (12) avant de pénétrer dans les canaux (36a) du corps céramique (36).

3. Procédé selon l'une des revendications 1 et 2, caractérisé en ce que les gaz d'échappement traversent tout d'abord un canal d'ionisation (37), puis des canaux de séparation (36a).

4. Procédé selon l'une des revendications 1 à 3, caractérisé en ce que l'intensité des champs électriques dans les canaux (36a) est réglée à une valeur comprise entre 100 et 1000 V/mm et de préférence, entre 200 et 500 V/mm.

5. Dispositif d'épuration de gaz d'échappement, conformément au procédé selon l'une des revendications 1 à 4, comportant un corps céramique (36) possédant des canaux (36a) pouvant être parcourus par les gaz d'échappement, des électrodes (2) servant à produire un champ électrique, qui traversent le corps céramique (36) et orientées transversalement par rapport à l'axe des canaux (36a), caractérisé en ce que l'intensité électrique dans les canaux (36a) est comprise entre 100 et 1000 V/mm et de préférence, entre 200 et 500 V/mm et qu'un nombre caractéristique E, qui tient compte de la géométrie de la section transversale des canaux (36a) et de la résistance électrique spécifique du matériau du corps céramique (36) et qui correspond à la relation

$$E = \frac{\rho \cdot \beta}{d}$$

est égal au moins à $10^7$ Ω et de préférence au moins à $10^8$ Ω, ρ représentant la résistance électrique spécifique du matériau céramique à 600°C en Ω.cm, β un facteur de forme géométrique et d la largeur ou l'épaisseur des parois séparant les canaux (36a), en cm, le facteur de forme géométrique β étant fourni par la relation suivante :

$$\beta = \frac{1}{x}$$

1 étant la longueur moyenne de la voie de courant formée dans le matériau céramique entre les électrodes (2), et x la distance entre les électrodes (2).

6. Dispositif selon la revendication 5, comportant un dispositif de séparation électrostatique de particules de suie, notamment à partir de gaz d'échappement de moteurs diesel, dans lequel des électrodes à haute tension (2) sont disposées parallèlement à la direction d'écoulement et également sensiblement parallèlement les unes aux autres, caractérisé en ce que les électrodes à haute tension (2) s'appliquent contre un corps céramique (36) disposé entre ces électrodes et comportant des canaux (36a) qui s'étendent dans la direction longitudinale du corps céramique et sont ouverts des deux côtés, et, lorsqu'on regarde la section transversale du corps céramique (36), la longueur des parois des canaux (36a) entre deux points de jonction (104) situés à l'opposé l'un de l'autre, qui relient les parois (105) qui déterminent la hauteur d'un canal (36a) dans la direction du champ électrique établi au moyen des électrodes à haute tension (2), aux autres parois (106) limitant le même canal (36a), est supérieure à la distance normale, mesurée dans la direction du champ, entre ces points de jonction (104), l'intensité de champ électrique se situant dans la gamme de 10 à 20 kV/cm à la température ambiante.

7. Dispositif selon la revendication 5 ou 6, caractérisé en ce que les parois (6',6'',6''',6$^{IV}$), qui sont disposées entre des rangées de canaux (36a), qui se jouxtent dans la direction du champ, s'étendent selon une disposition en zig-zag, les sections de paroi (6',6'''; 6'', 6$^{IV}$), qui sont distantes l'une de l'autre dans la direction (102) du champ et sont situés dans des positions réciproquement opposées et limitent respectivement un canal (36a), sont inclinées en des sens opposés par rapport à un plan perpendiculaire à la direction de charge ou un plan de cylindre.

8. Dispositif selon la revendication 5 ou 6, caractérisé en ce que les parois (51 et 58) du corps céramique (106), qui déterminent la hauteur des canaux (36a) mesurée dans la direction du champ, s'étendent par sections en faisant un angle par rapport à la direction (102) du champ.

9. Dispositif suivant la revendication 6, caractérisé par le fait que les parois (58), qui déterminent la hauteur des canaux (36a), possèdent une forme sinueuse ou bien sont réalisées essentiellement sous la forme d'un serpentin.

10. Dispositif suivant l'une des revendications 5 à 8, caractérisé par le fait qu'en dehors des canaux agencés sous la forme de canaux de séparation (36a), il est prévu au moins un canal d'ionisation (37) ouvert des deux côtés.

11. Dispositif suivant la revendication 10, caractérisé par le fait que le canal d'ionisation (37) est sensiblement parallèle aux canaux de séparation (36a).

12. Dispositif selon l'une des revendications 10 à 11, caractérisé en ce que le corps céramique possède une constitution essentiellement cylindrique, le canal d'ionisation (37) étant disposé au voisinage de l'axe du cylindre, tandis que les canaux de séparation (36a) sont disposés autour du canal d'ionisation( 37).

13. Dispositif selon l'une des revendications 10 à 12, caractérisé en ce que les parois des canaux de séparation (36a) sont recouvertes d'un catalyseur, qui favorise l'oxydation des hydrocarbures.

14. Dispositif selon l'une des revendications 5 à 13, caractérisé en ce que le corps céramique est formé par au moins deux plaques, qui sont disposées transversalement par rapport à la direction du champ et que les canaux sont constitués par des espaces intercalaires situés entre les plaques.

15. Dispositif selon l'une des revendications 5 à 14, caractérisé en ce que les parois intérieures des canaux (36a) possèdent une rugosité de surface d'au moins 1 µm et, de préférence, de plus de 2 µm.

Fig.1

Fig. 2

Fig.3

Fig.4

15

Fig. 5a

Fig. 5b

Fig. 5c

Fig. 5d